Europäisches Patentamt

European Patent Office

Office européen des brevets

(11) Publication number: **0 505 106 A2**

# EUROPEAN PATENT APPLICATION

(21) Application number: **92302165.3**

(22) Date of filing: **13.03.92**

(51) Int. Cl.5: **H04Q 7/04**, H04B 7/26

(30) Priority: **22.03.91 GB 9106148**

(43) Date of publication of application:
**23.09.92 Bulletin 92/39**

(84) Designated Contracting States:
**AT BE CH DE DK ES FR GB IT LI LU NL PT SE**

(71) Applicant: **VODAFONE LIMITED**
**The Courtyard, 2-4 London Road**
**Newbury, Berkshire RG13 1JL(GB)**

(72) Inventor: **Targett, David John**
**35 Somerton Gardens, Earley**
**Reading, Berkshire RG6 2XG(GB)**

(74) Representative: **Foster, David Martyn et al**
**MATHISEN MACARA & CO. The Coach**
**House 6-8 Swakeleys Road**
**Ickenham Uxbridge UB10 8BZ(GB)**

(54) Split service in cellular telecommunications networks and methods therefore.

(57) A macrocellular cellular telephone system has cells (macrocells) CI and CII. All the cells CI broadcast a particular Location Area Identity (LAI), and all the cells CII broadcast a different LAI. Upon receipt of an LAI, a macrocellular mobile station (MS) responds and the network thus knows its whereabouts. Communication is thus established with that MS by broadcasting from all cells within the appropriate area I or II. The network is also capable of offering a more restricted service to subscribers to a microcellular system - for example, service in large cities or towns identified at A,B and C. Microcells in these areas transmit LAI's which differ from the LAI's transmitted by the cells available for macrocellular subscribers. By means (for example) of its lower power level, a microcellular subscriber MS can be distinguished from a macrocellular MS and can be denied service unless it is within an area A,B or C.

Fig.1.

The invention relates to cellular telecommunications networks and methods. Embodiments of the invention to be described relate to cellular telephone networks involving mobiles including hand-held portable telephones, which can communicate with each other and with fixed telephones. However, the invention may be applied to any other type of cellular telecommunications network.

According to the invention, there is provided a cellular telecommunications network for permitting communication with the subscriber equipment of at least two separate subscriber systems, in which the cells of the network cannot all be used by the equipment of each of the systems, and including means for respectively transmitting from the cells signals identifying the particular subscriber systems whose equipments can use the cells and in which each subscriber equipment includes means operative in response to receipt of such identifying signal for producing a responding signal identifying the subscriber system to which the equipment belongs.

According to the invention, there is further provided a cellular telephone network for serving subscribers to a macrocellular system and also for serving subscribers to a microcellular system, and defining a plurality of cells which can all be used by subscribers to the macrocellular system but which cannot all be used by subscribers to the microcellular system, and in which the cells are grouped so that the cells of each such group all transmit the same Location Area Identity signal (LAI) which differs from the LAI transmitted by the cells of at least all the other adjacent groups, and including means in each subscriber equipment to respond to a received LAI by transmitting a responding signal identifying whether the equipment belongs to the macrocellular or the microcellular system, and means in the network for blocking service to equipment identified as belonging to the microcellular system unless the LAI identifies the group of cells as being available for use by subscribers to that system.

According to the invention, there is also provided a method of operating a cellular telephone network so as to permit it also to offer service over part, only, of its area to subscribers to a microcellular system, in which the cells available for use by subscribers to the microcellular network and defining the said part of the area are arranged to broadcast a Location Area Identity signal (LAI) differing from the LAI's broadcast by cells available for the macrocellular subscribers only, and including the step of blocking the service to any equipment which responds to LAI and whose transmitter power level identifies it as belonging to the microcellular system unless the LAI to which it is responding is one broadcast by a cell available for use by subscribers to the microcellular system.

Cellular telecommunications networks embodying the invention, and methods according to the invention of operating cellular telecommunications networks, will now be described, by way of example only, with reference to the accompanying diagrammatic drawing in which:

Figure 1 illustrates part of a cellular network; and

Figure 2 is a flow chart for explaining the operation of the network of Figure 1.

The cellular network to be described is a network capable of serving subscribers to (in this example) two different systems. In the particular example being described, one of the systems is the proposed Pan-European cellular digital telephone system - the GSM system - which enables users (primarily mobiles but also including hand-held portables) to communicate with each other and with fixed and other telephones over a wide geographical area. The second system, in this example, is assumed to be a more restricted system primarily for personal communication, using hand-held portable units and in this specification is termed a micro-cellular network (MCN) system. The MCN system is intended to provide its subscribers with a more restricted service: thus, they are able to use the system only when they are present in a restricted part of the total area covered by the GSM system; however, when they are provided with service, they can communicate with other subscribers to the MCN system as well as with fixed and other telephones (and including, in principle, subscribers to other cellular systems including the GSM system). For example, whereas GSM subscribers would have service throughout a large area (for example, covering part or substantially all of several European countries), MCN subscribers might be restricted to service within a particular part, only, of a particular one of the countries or one or more cities or towns (for example, those above a certain population level) within one or possibly more than one such country. MCN subscribers might therefore tend to be domestic users, whereas GSM subscribers would tend to be business users.

The network to be described is arranged so that, although it in principle grants service to a GSM subscriber throughout its area, service is only granted to an MCN subscriber if the latter is present in the more restricted area corresponding to the subscription paid for.

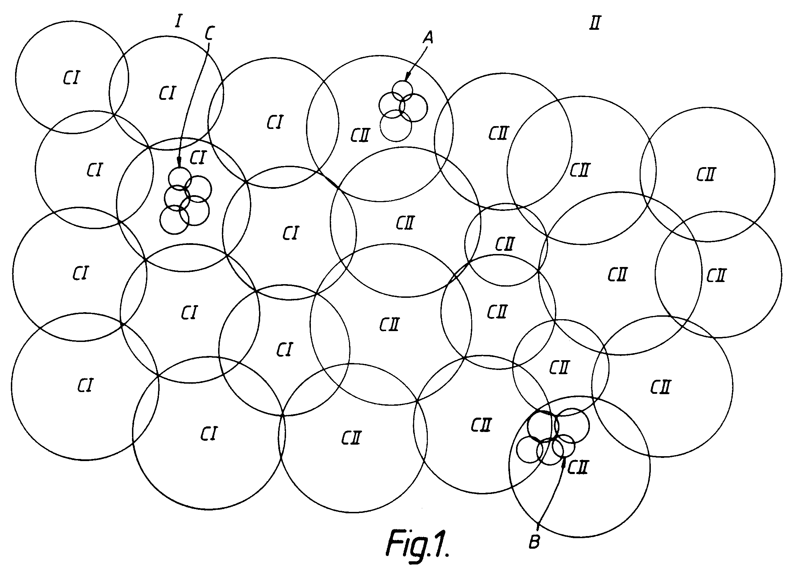

Figure 1 shows, diagrammatically, the cells of part of the network. The part of the network illustrated has GSM cells ("macrocells") CI and CII, the group of cells CI covering a particular geographical area I, termed a Location Area, and the group of cells CII covering a different, and adjacent, geographical area II - that is, a different Location Area. In practice, the network would also include other groups of cells forming further Location Areas, with a single country within the network being covered by a number of different Location Areas, each of which would comprise a relatively large number of separate macrocells.

In accordance with normal cellular practice, each macrocell is served by a respective base station (BS) comprising a radio transmitter/receiver which is controlled by a respective base station controller. A subscriber's mobile equipment (MS) located within a cell of the network communicates (to the extent possible in accordance with the subscription paid and in a manner to be explained) by radio communication with the base station of that cell and thence to the called party, such further communication being by radio and/or land line. The geographical extent of each cell is dependent on the geographical conditions and the characteristics of the radio transmitter/receiver in each cell and that of the radio transmitter/receiver of the MS. In practice, the cells will be of irregular and varying shape and overlapping as indicated. Within each cell, a predetermined plurality of radio channels is available for use for calls, the cellular arrangement enabling frequencies to be re-used within the network provided that the power and geographical separation between re-used frequencies is such as to prevent interference.

Operation of the network requires, of course, that the location of each MS be known within the network. For this reason, the cells are arranged in different Location Areas as already explained. All the cells within a particular Location Area are arranged to broadcast the same "Location Area Identity" signal or LAI, the LAI for each Location Area differing from the LAI of the others. When a GSM MS enters a cell in a particular Location Area, or when the MS becomes switched on, will receive the LAI of that Location Area from the base station of the cell in which the MS is located. In response to receipt of this LAI, the MS will transmit an identifying signal back to the base station, and in this way the network knows the position of the MS (that is, the Location Area in which the MS is located is known, though the actual cell is not known). When a call is to be made to that MS, the network knows that it must be made via a cell of the particular Location Area and a connection is established with the MS by means of a signal sent from all the cells in that particular Location Area. The MS receives the signal and responds to the BS of the nearest cell (that is, the cell from which the strongest signal is received). In this way, the particular cell in which the MS is located is identified and the call set up through that cell's base station. As is well known, the call is "handed over" to the base station of another cell when the subscriber's MS moves there from the initial cell.

As so far described, the network employs normal GSM techniques. However, the network also has to be able to handle calls to and from MCN subscribers. As already referred to above, MCN subscribers will be offered a different level of service - that is, it will be restricted to particular geographical areas forming part, only, of the total area available to a GSM subscriber. As shown in the Figure, three particular areas intended to be available to MCN subscribers are indicated at A, B and C. These areas could, for example, be areas encompassing relatively large cities or towns and are the areas which are intended to be available to the MCN subscribers. Each of the areas A,B and C is made up of a number of "microcells", that is, cells of smaller power and smaller geographical area than the macrocells of the GSM network; in principle, an area A,B or C could consist of only a single microcell, though in practice it is likely that it would comprise several such microcells. The microcells forming a particular area (e.g. areas A and C) could lie wholly within a corresponding macrocell or could fall within two or three macrocells (see area B).

In order for the network to be able to allocate the respective levels of service to subscribers to the two systems, the GSM and the MCN systems, the network has to be able to identify the subscriber system to which each active MS belongs and to check, in respect of such MS, that it is present within a cell covered by that subscriber's subscription. Therefore, in accordance with a feature of the network being described, the microcells of each particular area of microcells are provided with a particular LAI differing from the LAI of the groups of macrocells. Thus, the microcells of area A would be provided with an LAI which may be the same as or different from that of the microcells of areas B and C - but is different from the macrocells of areas I and II. Thus, the MS of an MCN subscriber will only be able to be linked into the network (that is, to make and receive calls) when it is present within a microcell. If an MCN MS is present within a cell within area I or area II, but outside any of the areas A,B and C, it will receive the appropriate LAI broadcast by the cell and will, in response, reply with an identifying signal. The network will recognise this identifying signal as being from an MCN MS and will respond with a rejection message causing the MS to provide a "NO SERVICE" indication, thus blocking that MS from making or receiving calls. However, when the MCN MS moves into one of the areas A,B,C and receives the corresponding LAI and responds with its own identifying signal, the network will recognise that the corresponding subscriber's subscription entitles that MS to service there and such service will thus be permitted.

The foregoing assumes that a particular MCN subscriber's subscription entitles service in all of the areas A,B and C. However, it is of course possible that the subscription entitles operation only in one or two of these areas. The network is able to account for this variation by arranging for the LAI's of the areas A,B and C to be different instead of the same.

The foregoing also requires that each subscriber's MS issues a signal identifying whether it is a GSM MS or an MCN MS. A convenient method of distinguishing between GSM and MCN MS is by reference to the "Classmark" or power of each MS. GSM MS have a Classmark of 1,2,3 or 4 (indicating a power varying in the range 20 to 2 watts). MCN subscribers have a Classmark of 5 (0.8 watts). Each MS equipment includes an indication of its Classmark in its identifying signal and this enables the network to distinguish between GSM and MCN MS in a simple way.

In certain circumstances, an MCN subscriber may temporarily change to GSM service. For example, such a subscriber may temporarily connect a Class 5 hand-held MS to a power booster adapter (for example, a power booster adapter fitted in a vehicle), thus temporarily changing it to Class 4 or higher. The identifying signal emitted by the MS will change accordingly, and the network will respond by granting GSM service - that is, by permitting such equipment to have service, temporarily, not only in the microcells but also in the GSM macrocells. The network would thus automatically charge the subscriber accordingly.

It will be apparent from the foregoing that GSM subscribers can operate throughout the areas I and II (that is, within the areas covered by both the macrocells and the microcells). The network can be organised so that, when a GSM MS is within a microcell, communication with that subscriber is either via the base station of that microcell or the base station of the macrocell; the MS will respond to the strongest LAI which will normally be that of the macrocell but may under certain circumstances be that of the microcell. An MCN MS in a microcell may also initially respond to the LAI of the corresponding macrocell - because this will be the strongest LAI. However, as explained, service via this macrocell will be rejected. The MS will therefore rescan for the next strongest LAI - which will be that of the microcell.

As explained above, if an MCN MS is located outside a microcell (of, in this example, areas A,B and C), it will not be able to establish service - because the broadcast LAI will identify the cell as being a macrocell and not a microcell and the identity of the MS will identify it as an MCN MS; a NO SERVICE indication will thus be given to the subscriber. However, in response to this, the MS may be arranged to perform "cell reselection", that is, to search for another cell permitting service to be established - that is, a microcell. Thus, if the MS is located adjacent to a microcell, it may be able to establish communication via that microcell - provided that the signal strength is sufficient. Therefore, cell reselection involves the process of searching for cells having other LAI's. However, during this process, cells having the same LAI as the initial one (which provided the rejection message causing the NO SERVICE signal) are ignored.

If a moving MCN MS moves out of a microcell during a call and into a macrocell, "hand over of the call to the macrocell may not be permitted - because the network will have established that the subscriber is not entitled to GSM service. Alternately the subscriber may be permitted temporary usage of the macrocell in order to complete the call. However, once terminated, no new calls would be permitted to be established in the macrocell.

Although the network has been described as handling calls from two different types of subscribers only, it will be apparent that the same principles can be applied to handle subscribers from three or more systems.

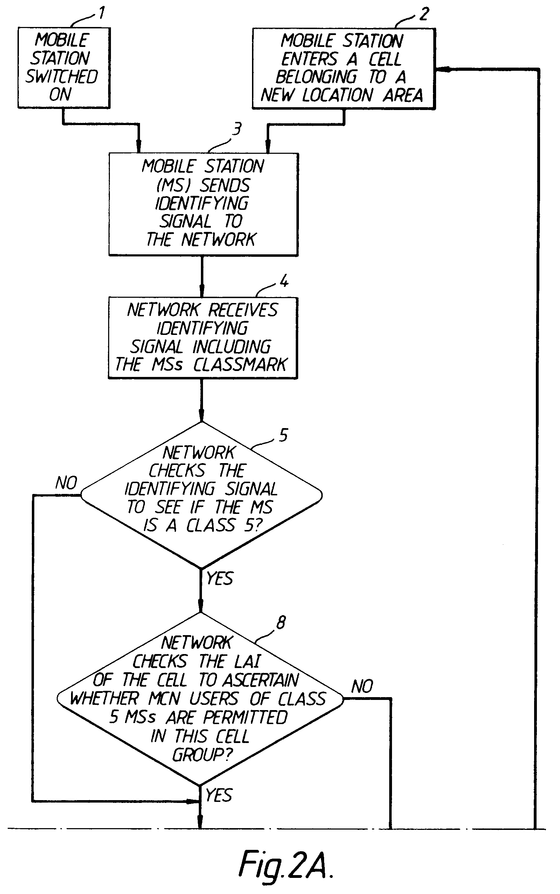

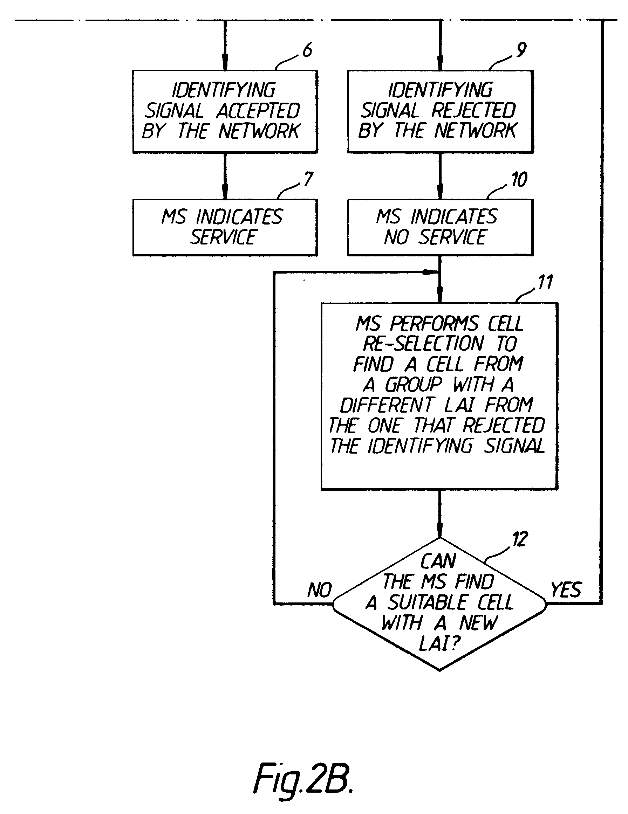

The flow chart of Figure 2 illustrates the processes described above.

Block 1 represents the situation when a mobile station (whether a GSM MS or an MCN MS) is switched on within the network. Block 2 represents the case where an MS (again, a GSM MS or an MCN MS), already switched on, enters a cell in a new Location Area (for example, it enters Location Area II from Location Area I or enters a Location Area comprising a group of microcells from the adjacent Location Area formed by the adjacent macrocells).

In each case, the MS sends an identifying signal to the network (Block 3).

The network receives this identifying signal, which includes an indication of the "Classmark" or power of the MS (Block 4).

The network then checks the identifying signal to check whether the MS has a Classmark of 5 or not (Block 5). If the MS does not have a Classmark of 5 (but of 1,2,3 or 4), the network knows that it is a GSM MS and is thus entitled to service throughout the network. The identifying signal is thus accepted by the network (Block 6) and the MS provides a "SERVICE" signal (Block 7), so that the subscriber may use the MS to make or receive calls.

However, if (Block 5) the network identifies the MS as having a Classmark of 5, the MS is thus identified as an MCN MS. The network can thus now make a check (Block 8) whether MCN MS's can use the current cell; in other words, it checks the LAI of the cell to ascertain whether cells of this cell group can be used by MCN MS's. If the answer is "yes" (that is, that the cell is a microcell), the identifying signal is accepted by the network (Block 6) and the MS provides a "SERVICE" indication (Block 7).

However, if the answer is "no", the identifying signal is rejected by the network (Block 9) and the MS produces a "NO SERVICE" indication (Block 10). The operator therefore knows that calls cannot be made or received.

The MS now re-scans for a different LAI (Block 11). It checks whether it can tune to a new LAI (Block 12). If the answer is "no", the process is repeated. If the answer is "yes", the process repeats from Block 2. Thus, if the MS is an MCN MS within a microcell, it may initially tune to the LAI of the corresponding macrocell because this has the greatest signal strength. At block 8, the checking process will produce the answer no - that is, the network will determine that the MS is not entitled to obtain service via the macrocell. The steps illustrated in blocks 9,10 and 11 are then followed. At block 11, the MS will re-scan for a different LAI and will thus tune to the LAI of the microcell. The process then continues from block 2 again and, this time, the answer given at block 8 will be "yes" and the MS will therefore be able to receive service.

## Claims

1. A cellular telecommunications network, characterised in that it permits communication with the subscriber equipment of at least two separate subscriber systems (e.g. GSM,MCN), in that the cells (CI,CII,A,B,C) of the network cannot all be used by the equipment of each of the systems (e.g. GSM,MCN), and by means for respectively transmitting from the cells (CI,CII,A,B,C) signals (LAI) identifying the particular subscriber systems (e.g. GSM,MCN) whose equipments can use the cells (CI,CII,A,B,C), and in that each subscriber equipment (MS) includes means operative in response to receipt of such identifying signal (LAI) for producing a responding signal identifying the subscriber system (e.g. GSM,MCN) to which the equipment belongs.

2. A network according to claim 1, characterised in that each responding signal is a signal dependent on the Class or power of the subscriber equipment (MS).

3. A cellular telephone network, characterised in that it is adapted to serve subscribers to a macrocellular system (e.g. GSM) and also to serve subscribers to a microcellular system (e.g. MCN), in that it defines a plurality of cells (CI,CII,A,B,C) which can all be used by subscribers to the macrocellular system (GSM) but which cannot all be used by subscribers to the microcellular system (MCN), and in that the cells are grouped so that the cells of each such group (CI;CII;A,B,C) all transmit the same Location Area Identity signal (LAI) which differs from the LAI transmitted by the cells of at least all the other adjacent groups (CI;CII;A,B,C), and by means in each subscriber equipment (MS) to respond to a received LAI by transmitting a responding signal identifying whether the equipment belongs to the macrocellular (GSM) or the microcellular system (MCN), and means in the network for blocking service to equipment identified as belonging to the microcellular system (MCN) unless the LAI identifies the group of cells as being available for use by subscribers to that system.

4. A network according to claim 3, characterised in that the cells (A,B,C) available for use by the subscribers to the microcellular system (MCN) are geographically smaller than the other cells (CI,CII).

5. A network according to claim 3 or 4, characterised in that the Class or power of the equipment of the microcellular system (MCN) is less than the power of the equipments of the subscribers to the macrocellular system (GSM), and in that the responding signal is a signal indicating the power of the respective equipment.

6. A method of operating a cellular telephone network (e.g. GSM), characterised in that it permits it also to offer service over part, only, of its area to subscribers to a microcellular system (e.g. MCN), in that the cells (A,B,C) available for use by subscribers to the microcellular network (MCN) and defining the said part of the area are arranged to broadcast a Location Area Identity signal (LAI) differing from the LAI's broadcast by cells (CI,CII) available for the macrocellular subscribers only, and by the step of blocking the service to any equipment which responds to an LAI and whose transmitter power level identifies it as belonging to the microcellular system (MCN) unless the LAI to which it is responding is one broadcast by a cell (A,B,C) available for use by subscribers to the microcellular system (MCN).

Fig.1.

```
                                                              2
   1                                        ┌─────────────────────┐
┌──────────┐                                │   MOBILE STATION    │
│  MOBILE  │                                │  ENTERS A CELL      │
│ STATION  │                                │  BELONGING TO A     │
│ SWITCHED │                                │ NEW LOCATION AREA   │
│   ON     │                                └─────────────────────┘
└──────────┘
```

MOBILE
STATION
SWITCHED
ON

MOBILE STATION
ENTERS A CELL
BELONGING TO A
NEW LOCATION AREA

MOBILE STATION
(MS) SENDS
IDENTIFYING
SIGNAL TO
THE NETWORK

NETWORK RECEIVES
IDENTIFYING
SIGNAL INCLUDING
THE MSs CLASSMARK

NETWORK
CHECKS THE
IDENTIFYING SIGNAL
TO SEE IF THE MS
IS A CLASS 5?

NO

YES

NETWORK
CHECKS THE LAI
OF THE CELL TO ASCERTAIN
WHETHER MCN USERS OF CLASS
5 MSs ARE PERMITTED
IN THIS CELL
GROUP?

NO

YES

Fig.2A.

Fig.2B.